# EUROPEAN PATENT APPLICATION

(11) **EP 3 617 910 A1**
(43) Date of publication of application: **04.03.2020**
(21) Application number: 18791089.8
(22) Date of filing: 10.04.2018
(51) Int. Cl.: G06F 17/30

(54) **METHOD AND APPARATUS FOR DISPLAYING TEXTUAL INFORMATION**

(30) Priority: 24.04.2017 CN 201710272598
(71) Applicant: Beijing Kingsoft Office Software, Inc., Beijing 100085 (CN); Zhuhai Kingsoft Office Software Co., Ltd, Zhuhai, Guangdong 519015 (CN); Guangzhou Kingsoft Mobile Technology Co., Ltd, Guangzhou, Guangdong 510000 (CN)
(72) Inventor: ZHOU, Xian, Zhuhai, Guangdong 519015 (CN)
(74) Representative: Winter, Brandl, Fürniss, Hübner, Röss, Kaiser, Polte - Partnerschaft mbB
(86) International application number: PCT/CN2018/082569
(87) International publication number: WO 2018/196607

(57) **Abstract**

The embodiments of the present application provide a method and apparatus for displaying textual information, the method comprises: obtaining original textual information; extracting, by means of a semantic analysis algorithm, an information feature and information contents of the original textual information, the information feature is an information type described by the original textual information, the information contents are specific contents of information described by the original textual information; using a text display form matching with the information feature to display the information contents, the text display forms comprise a typesetting form or a structural format of the textual information contents; which improves the efficiency of creating the textual information and the user experience, and enables the textual information to be displayed by a preferable text display form, thus improving the expressiveness of the textual information.

## Description

The present application claims the priority to a Chinese patent application No. 201710272598.3, filed with the China National Intellectual Property Administration on April 24, 2017 and entitled "Method and apparatus for displaying textual information", which is incorporated herein by reference in its entirety.

### Technical Field

The present application relates to the field of word processing technology, and in particular, to a method and apparatus for displaying textual information.

### Background

With the development of various terminal devices and Internet technologies, people may record a variety of textual information on various terminal devices. For example, a user may record various textual information through a note function on a mobile phone; create articles on a computer, etc. The display of textual information on a terminal device is already an indispensable function of the terminal device.

There are many text display forms. For example, the text may be directly displayed; the text may be displayed in the form of a title or an item number; the textual information may be displayed in the form of a chart; the textual information may be displayed in the form of a mind map.

In a practical application, in order to make the textual information more expressive and easy to understand, different text display forms may be selected according to the content of the textual information. Currently, when displaying textual information, it is necessary to first select a text display form, and then create textual information according to the selected text display form. For example, the user may create the textual information by selecting a display form such as a chart or a mind map. In this way, the textual information may be displayed according to the selected text display form.

It can be seen that the textual information is not created when selecting the text display form, so the text display form selected by the user before creating the textual information may not be suitable for the textual information to be created. The user may need to repeat the selection of the text display form and the creation of the textual information, which reduces the efficiency of creating the textual information and the user experience.

### Summary

The purpose of the embodiments of the present application is to provide a method and apparatus for displaying textual information, so as to implement the selection of a suitable text display form according to the created textual information, and then the textual information is displayed in the text display form, which improves the efficiency of creating the textual information and the user experience. Specifically, the technical solutions are as follows.

In order to realize the above purposes, an embodiment of the present application provides a method for displaying textual information, including:
obtaining original textual information;
extracting, by means of a semantic analysis algorithm, an information feature and information contents of the original textual information, the information feature is an information type described by the original textual information, the information contents are specific contents of information described by the original textual information;
using a text display form matching with the information feature to display the information contents.

Optionally, the information feature includes a behavior type and/or a structure type, wherein the behavior type is an action type with a time sequence described by the original textual information, and the structure type is a structure form of the information described by the original textual information.

Optionally, using a text display form matching with the information feature to display the information contents includes:
determining, from preset multiple text display forms, a set of text display forms matching with the information feature;
displaying the set of text display forms to enable a user to select a target text display form from the set of text display forms;
receiving a selection instruction input by the user, wherein the selection instruction includes the target text display form;
using the target text display form to display the information contents.

Optionally, after using the target text display form to display the information contents, the method further includes:
recording a correspondence between the information feature and the target text display form.

Optionally, the method further includes:
if multiple correspondences between the information feature and text display forms are recorded, selecting, from the text display forms corresponding to the information feature, a text display form recorded the greatest number of times as a matching text display form of the information feature to store.

In order to realize the above purposes, an embodiment of the present application further provides an apparatus for displaying textual information, including:
an obtaining module, configured for obtaining original textual information;
an extracting module, configured for extracting, by means of a semantic analysis algorithm, an information feature and information contents of the original textual information, the information feature is an information type described by the original textual information, the information contents are specific contents of information described by the original textual information;
a display module, configured for using a text display form matching with the information feature.

Optionally, the information feature includes a behavior type and/or a structure type, wherein the behavior type is an action type with a time sequence described by the original textual information, and the structure type is a structure form of the information described by the original textual information.

Optionally, the display module is specifically configured for:
determining, from preset multiple text display forms, a set of text display forms matching with the information feature; displaying the set of text display forms to enable a user to select a target text display form from the set of text display forms; receiving a selection instruction input by the user, wherein the selection instruction includes the target text display form; using the target text display form to display the information contents.

Optionally, the apparatus further includes:
a recording module, configured for recording a correspondence between the information feature and the target text display form.

Optionally, the apparatus further includes:
a selection unit, configured for, if multiple correspondences between the information feature and text display forms are recorded, selecting, from the text display forms corresponding to the information features, a text display form recorded the greatest number of times as a matching text display form of the information feature to store.

In order to achieve the above purposes, an embodiment of the present application further provides an electronic device, including a processor and a memory; wherein, the memory is configured for storing a computer program; the processor is configured for executing the program stored in the memory to implement the above method for displaying textual information.

In order to achieve the above purposes, an embodiment of the present application provides a machine readable storage medium. The machine readable storage medium stores a computer program therein, and the computer program implements the above method for displaying textual information when being executed by a processor.

In order to achieve the above purposes, an embodiment of the present application further provides a computer program, and the computer program implements the above method for displaying textual information when being executed by a processor.

Embodiments of the present application provide a method and apparatus for displaying textual information, in which an information feature and information contents are extracted from the textual information, a text display form matching with the information feature is selected, and the information contents of the textual information is displayed in the text display form, avoiding the problem that the selected text display form is not suitable for the textual information before creating the textual information, thus improving the efficiency of creating the textual information and the user experience. In addition, the textual information is displayed by the text display form matching with the information feature, thus the expressiveness of the textual information is improved. It should be understood that any product or method for implementing the embodiments of the present application does not necessarily require to achieve all of the advantages described above.

### Brief Description of the Drawings

In order to more clearly describe the technical solution of the embodiments of the application or of the prior art, drawings needed in the embodiments and the prior art will be briefly described below. Obviously, the drawings described below are for only some embodiments of the present application, one of ordinary skills in the art can also obtain other drawings based on these drawings without any creative efforts.
Fig. 1 is a flow diagram of a method for displaying textual information according to an embodiment of the present application.
Fig. 2 is a schematic diagram of a text display form corresponding to travel arrangement according to an embodiment of the present application.
Fig. 3 is a schematic diagram of structured data according to an embodiment of the present application.
Fig. 4 is a schematic diagram of a text display form corresponding to a tree structure according to an embodiment of the present application.
Fig. 5 is a structural diagram of an apparatus for displaying textual information according to an embodiment of the present application.
Fig. 6 is a structural diagram of an electronic device according to an embodiment of the present application.

### Detailed Description

The technical solution of the application will be described in detail with reference to the drawings of embodiments of the present application. Obviously, the embodiments described are only some instead of all of the embodiments of the present application. All other embodiments obtained by those of ordinary skills in the art based on the embodiments herein without any creative efforts are within the scope of the present application.

In order to improve the efficiency of creating the textual information and the user experience, embodiments of the present application provide a method and apparatus for displaying textual information. The present application will be described in detail below through specific embodiments.

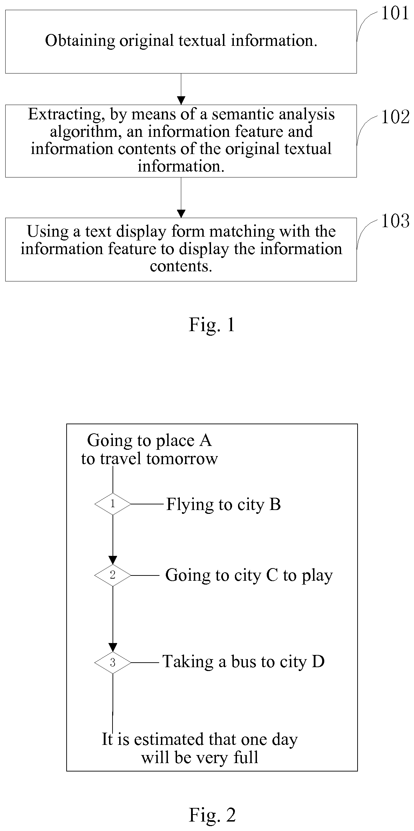

Referring to Fig. 1, Fig. 1 is a flow diagram of a method for displaying textual information according to an embodiment of the present application. The method may be applicable to electronic devices such as mobile phones, computers or other terminal devices with data processing capabilities. The method for displaying textual information includes:
Step 101, obtaining original textual information.

The original textual information may be textual information existing on an electronic device, or may be textual information being created on the electronic device, or may be textual information stored in a storage device.

There are many formats for textual information, such as TXT format, Word format, etc. In the embodiment of the present application, any text format that may be recognized by the electronic device may be applicable to the embodiment of the present application. The original textual information may be either one paragraph or multiple paragraphs. The specific typesetting form is not limited here.

There are many ways for the electronic device to obtain the original textual information. For example, the electronic device may obtain the original textual information that the user has input or is being input, and may also obtain the existing original textual information directly from the storage device.

Step 102, extracting, by means of a semantic analysis algorithm, an information feature and information contents of the original textual information.

The information feature is an information type described by the original textual information, the information contents are specific contents of information described by the original textual information.

After obtaining the original textual information, by means of the semantic analysis algorithm, a semantic analysis processing is performed on the original textual information and the information feature and information contents are extracted from the original textual information.

The original textual information may be considered as a collection of words and can therefore describe specific events, behaviors, relationship between objects or other abstract concepts or the like by arranging the words in a regular order. The information feature is an information type described by the original textual information.

For example, the original textual information f1 is: "going to place A to travel tomorrow, first flying to city B, then going to city C to play, then taking a bus to city D, it is estimated that one day will be very full." By means of the semantic analysis algorithm, the semantic analysis processing is performed on the original textual information f1, and it may be determined that the information type described by the original textual information f1 is travel arrangement.

In the embodiment of the present application, a plurality of information features may be preset, such as travel arrangement, logical derivation process, organizational structure, statistical data, etc.. By means of the semantic analysis algorithm, the semantic analysis processing is performed on the original textual information, and the information type described by the original textual information may be determined as one of a plurality of preset information features, thereby extracting the information feature from the original textual information.

The information contents are specific core contents described by the original textual information. The information contents may not include words such as conjunctions used to connect sentences, modal particles, etc. in the original textual information, which have not specific meanings. Still using the above example, the information contents of the original textual information f1 may be: "going to place A to travel" , "flying to city B", "going to city C to play", "taking a bus to city D" and "it is estimated that one day will be very full".

The semantic analysis algorithm may be implemented in hardware, software, or a combination of both. The information feature and the information contents of the original textual information can be obtained by analyzing the meanings of words and a relationship between the words in the original textual information. The semantic analysis algorithm employed in the embodiment of the present application may be algorithms such as PLSA (probabilistic latent semantic analysis), NMF (Non-negative Matrix Factorization) or DA (Latent Dirichlet Allocation) etc. It may be selected according to the requirements in the embodiment of the present application, which is not detailed herein.

Step 103, using a text display form matching with the information feature to display the information contents.

The text display form includes a typesetting form or a structural format of textual information contents.

After obtaining the information feature and information contents of the original textual information, the text display form matching the information feature may be determined.

In the embodiment of the present application, a corresponding identifier may be assigned to a text display form, and the identifiers may represent different types of text display forms. Thereby, a text display form matching with information feature may be determined according to the identifier.

After a corresponding text display form matching with the information feature is determined, the extracted information contents of the original textual information may be filed into the matched text display form, thereby displaying the information contents by the text display form.

Still using the above example, the extracted information feature of the original textual information f1 is travel arrangement. A text display form corresponding to the travel arrangement may be determined from preset text display forms. The information contents of the original textual information f1 that have been extracted are then filled into the text display form corresponding to the travel arrangement. The text display form after filling with the information contents is as shown in Fig. 2, which is a schematic diagram of the text display form corresponding to the travel arrangement according to an embodiment of the present application.

The information contents may also be converted into structured data that can be recognized by the electronic device. The structured data can be represented by data or a unified structure, which is more beneficial to display the information contents in the text display form.

That is, the electronic device may convert the information contents into structured data that can be recognized by the electronic device, and then fill the structured data into the text display form matching with the information feature for displaying.

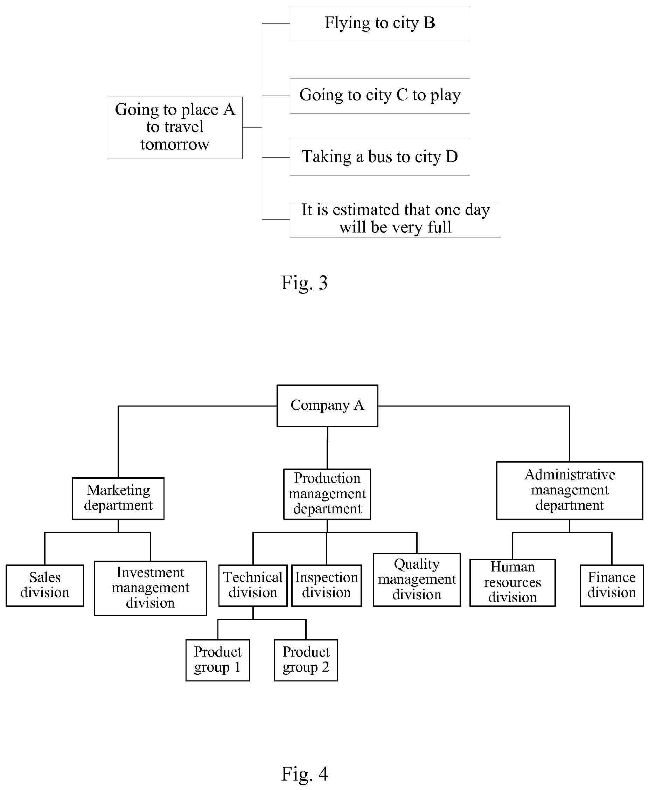

Still using the above example, after extracting the information contents in the original textual information f1, the information contents may be converted into the structured data as shown in Fig. 3, which is a schematic diagram of structured data according to an embodiment of the present application.

In the embodiment of the present application, by means of the semantic analysis algorithm, the information feature and information contents may be extracted from the obtained original textual information, a text display form matching with the information feature may be selected, and the information contents of the textual information may be displayed in the text display form, thus avoiding the problem that the selected text display form is not suitable for the textual information before creating the textual information, and avoiding repeated work performed by the user. Furthermore, it improves the efficiency of creating the textual information and the user experience, and enables the textual information to be displayed by the text display form matching with the information feature, thus improving the expressiveness of the textual information.

Optionally, in the method for displaying textual information provided in the embodiment of the present application, the information feature may include a behavior type which is an action type with a time sequence described by the original textual information.

When extracting the information feature in the original textual information by means of the semantic analysis algorithm, if information described by the original textual information includes actions with a time sequence, then the information feature related to the actions with the time sequence may be referred to as the behavior type. For example, the travel arrangement extracted from the original textual information f in the above example is a typical behavior type.

There are many behavior types, such as schedule, meeting agenda, etc.

Correspondingly, using a text display form matching with the information feature to display the information contents may include:
using a text display form matching with the behavior type to display information contents of the behavior type.

That is, when the information feature extracted from the original textual information is the behavior type, the text display form matching with the behavior type is used to display contents of the behavior type in information contents extracted from the original textual information.

When the information feature of the original textual information is the behavior type, the text display form corresponding to the behavior type may be determined, and one or more different text display forms may be preset for each behavior type. For example, for the behavior type of travel arrangement, the text display forms such as routing arrangement or map navigation mark, etc. may be preset; for the behavior type of meeting arrangement, the text display forms such as routing arrangement or meeting progress table, etc. may be preset.

By matching the text display form with the behavior type, the text display form may be more targeted and the information contents may be expressed more expressively.

Optionally, in the method for displaying textual information provided in the embodiment of the present application, the information feature may include a structure type which is a structure form of the information described by the original textual information.

When the information described by the original textual information is not related to actions with a time sequence, the information feature may also be classified by structure type of the information described by the original textual information.

For example, the structure type described by the original textual information may be a tree structure, a one-dimensional flow structure, a one-dimensional tile structure, a two-dimensional structure, a three-dimensional structure, a multi-dimensional structure, and the like.

When the information described by the original textual information is information of a multi-branch structure, such as an organization relationship structure, mutually juxtaposed clauses, or a logical derivation process, etc., the structure type of the information described by the original textual information may be considered as the tree structure.

When the information described by the original textual information is a flow of events or other information that does not include a branch structure, the structure type of the information described by the original textual information may be considered as the one-dimensional flow structure.

When the information described by the original textual information has structures that overlap or affect each other, for example, when the information described relates to concepts such as intersection, union, etc., the structure type of the information described by the original textual information may be considered as the one-dimensional tile structure.

When the information described by the original textual information has two dimensions, for example, the information described by the original textual information is salary statistic data of 12 months. Then the original textual information has information contents of two dimensions, which are respectively month and salary corresponding to the month. Therefore, the structure type of the information described by the original textual information may be considered as the two-dimensional structure.

Similarly, structure type such as the three-dimensional structure, the multi-dimensional structure, etc. is similar to the two-dimensional structure, which is not described again in detail.

The structure types listed above cannot be exhaustive and do not include all structure types, and various structure types may be defined or created according to requirements in practical applications.

Correspondingly, in the embodiment of the present application, using a text display form matching with the information feature to display the information contents may include:
using a text display form matching with the structure type to display information contents of the structure type.

That is, when the information feature extracted from the original textual information is a structure type, a text display form matching with the structure type is used to display contents of the structure type in the information contents extracted from the original textual information.

Each structure type may correspond to one or more text display forms. For example, the text display form corresponding to the tree structure may be multiple paragraphs with bullets, a mind map and an organizational structure chart, etc..

The text display form corresponding to the one-dimensional flow structure may be a flow diagram, a value chain diagram, an event chain diagram, and the like.

The text display form corresponding to the one-dimensional tile structure may be a Venn diagram.

The text display form corresponding to the two-dimensional structure may be a table.

The text display form corresponding to the three-dimensional structure may be a pivot table.

The text display form corresponding to the multi-dimensional structure may be a UML (UML-Unified Model Language) diagram.

After determining the structure type of the information described by the original textual information, the text display form matching with the structure type may be determined, and the information contents of the original text information may be displayed using the text display form.

For example, original textual information f2 is: "Company A has a marketing department, a production management department, and an administrative management department; where the marketing department has a sales division and an investment management division; and the production management department has a technical division, an inspection division, and a quality management division; the technical division is divided into product group 1 and product group 2 according to different products in charge; the administrative management department has a human resources division and a finance division."

By means of the semantic analysis algorithm, an information feature and information contents of the original textual information may be exacted, and the information feature of the original textual information may be determined as the structure type of the tree structure. And a text display form corresponding to the tree structure may be determined, such as an organizational structure diagram, and the text display form is used to display the information contents of the original textual information, referring to Fig. 4, which is a schematic diagram of a text display form corresponding to the tree structure according to an embodiment of the present application.

It can be seen from Fig. 4, the information contents of the original textual information f2 are displayed by the text display form of the organizational structure diagram. This makes it possible to more clearly express the specific contents that the original textual information f2 wants to express.

In the embodiment of the present application, the structure type of information described by the original textual information is determined, and a text display form matching with the specific structure type is determined, which enables to improve the matching accuracy, and the matched text display form is more suitable for displaying the information described by the textual information.

Optionally, in the method for displaying textual information provided by the embodiment of the present application, the information feature may include a behavior type and a structure type.

Correspondingly, in the embodiment of the present application, using a text display form matching with the information feature to display the information contents may include:
using a text display form matching with the behavior type to display information contents of the behavior type;
using a text display form matching with the structure type to display information contents of the structure type.

That is, a text display form matching with the behavior type is used to display contents of the behavior type in the information contents extracted from the original textual information; a text display form matching with the structure type is used to display contents of the structure type in the information contents extracted from the original textual information.

Optionally, in the method for displaying textual information provided by the embodiment of the present application, using a text display form matching with the information feature to display information contents includes:
in a first step, determining, from preset multiple text display forms, a set of text display forms matching with the information feature.

In the embodiment of the present application, multiple text display forms may be preset for each information feature. When it is necessary to determine a text display form, the text display form matching with the information feature can be determined quickly by selecting from the preset multiple text display forms according to the information feature.

However, in many cases, one information feature may usually match with multiple text display forms. If the information feature is matched with multiple text display forms, the electronic device often cannot determine an optimal text display form. Therefore, multiple text display forms matching with the information feature may be put into a set of text display forms, and the set of text display forms may include multiple text display forms matching with the information feature, or may include identifiers of multiple text display forms matching with the information feature.

In a second step, displaying the set of text display forms.

After determining the set of text display forms consisting of multiple text display forms that match with the information feature, the electronic device displays the set of text display forms to the user, so that the user may select the most suitable text display form from the set of text display forms. The most suitable text display form is a target text display form here.

In a third step, receiving a selection instruction input by the user, the selection instruction includes the target text display form.

In a fourth step, using the target text display form in the selection instruction to display information contents.

After selecting by the user, the electronic device receives a selection instruction input by the user, and the selection instruction input by the user may be an operation signal of the user to the electronic device, for example, a mouse click or other selection manner. The electronic device may determine a target text display form matching with the information feature according to the user's operation. And the electronic device may use the text display form to display information contents of the original textual information.

In the embodiment of the present application, in the process of determining a text display form, the user may directly participate in, which not only improves the accuracy of the matching, but also makes the final result more in line with the user's expectation, thus further improving the user experience.

Optionally, in the method for displaying textual information provided by the embodiment of the present application, after using the text display form in the selection instruction to display information contents, the method further includes:
recording each text display form selected by the user for the information feature.

That is, recording a correspondence between the information feature and the target text display form.

Moreover, the method further includes establishing correspondences between the information feature and the text display forms according to each text display form selected by the user for the information feature.

That is, recording multiple correspondences between the information feature and text display forms according to the selection instructions input by multiple users, and selecting, from the text display forms corresponding to the information feature, a text display form recorded the greatest number of times as a matching text display form of the information feature to store.

Each time the user selects a text display form that is most suitable for the information feature from multiple text display forms matching with the information feature, the electronic device may record the text display form selected by the user for this information feature. Thereby the electronic device may record a large amount of selection results of text display forms selected by different users for this information feature.

By accumulating a large amount of data, a correspondence between the information features and the text display forms may be established. For example, for one information feature, 90% of users select text display form A, and 10% of users select text display form B. It may be considered that for this information feature, the text display form A is the optimal text display form, so that a correspondence between the information feature and the text display form A may be established. The correspondence refers to a relationship between text display forms and information features, which may be realized in the form of a table. See a comparison table between the text display forms and the information features shown in Table 1. The correspondence between the text display forms and the information features can be clearly recorded by using a table.

**Table 1**

| First information feature | Second information feature | Third information feature | Fourth information feature |
|---|---|---|---|
| Text display form A | Text display form C | Text display form D | Text display form B |

Correspondingly, using a text display form matching with the information feature to display the information contents may include:
determining, according to a correspondence, a text display form matching with the information feature;
using the text display form matching with the information feature to display the information contents.

After determining a correspondence between various text display forms and different information features through a large amount of selection results made by the users, the correspondence may be used to more quickly and accurately determine a text display form matching with an information feature, and display the information contents of the original textual information through the text display form. Then the matching efficiency is further improved, the correspondence is obtained according to a large amount of selection results of users, therefore the matching result obtained according to the correspondence can be more in line with the user's need.

In one embodiment of the present application, each time the user selects a text display form that is most suitable for the information feature from multiple text display forms matching with the information feature, the electronic device may record a correspondence between the information feature and the text display form selected by the user.

When other original textual information is obtained, a text display form recorded the most may be selected from a large amount of recorded correspondences between the information feature and text display forms selected by the user as a matching text display form of the information feature, and then the selected text display form is used to display information contents extracted from other original textual information.

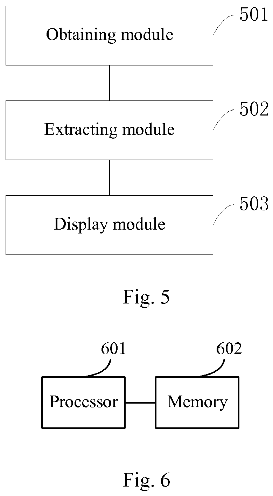

Based on the same invention concept, referring to Fig. 5, which is a structural diagram of an apparatus for displaying textual information according to an embodiment of the present application, including:
an obtaining module 501, configured for obtaining original textual information;
an extracting module 502, configured for extracting, by means of a semantic analysis algorithm, an information feature and information contents of the original textual information, the information feature is an information type described by the original textual information, the information contents are specific contents of information described by the original textual information;
a display module 503, configured for using a text display form matching with the information feature to display the information contents, the text display form includes a typesetting form or a structural format of textual information contents.

In the embodiment of the present application, by means of the semantic analysis algorithm, the information feature and information contents may be extracted from the obtained original textual information, a text display form matching with the information feature may be selected, and the information contents of the textual information may be displayed in the text display form, which improves the efficiency of creating the textual information and the user experience, and enables the textual information to be displayed by the text display form matching with the information feature, thus improving the expressiveness of the textual information.

Optionally, in the apparatus for displaying textual information provided in the embodiment of the present application, the information feature extracted by the extracting module 502 includes a behavior type which is an action type with a time sequence described by the original textual information.

Correspondingly, the display module 503, may be specifically configured for: using a text display form matching with the behavior type to display information contents of the behavior type.

That is, the display module 503, may be specifically configured for: using a text display form matching with the behavior type to display the information contents.

Optionally, in the apparatus for displaying textual information provided in the embodiment of the present application, the information feature extracted by the extracting module 502 includes a structure type which is a structure form of information described by the original textual information.

Correspondingly, the display module 503, may be specifically configured for: using a text display form matching with the structure type to display information contents of the structure type.

That is, the display module 503, may be specifically configured for: using a text display form matching with the structure type to display the information contents.

Optionally, in the apparatus for displaying textual information provided by the embodiment of the present application, the display module 503 is specifically configured for:
determining, from preset multiple text display forms, a set of text display forms matching with the information feature; displaying the set of text display forms to enable a user to select a target text display form from the set of text display forms; receiving a selection instruction input by the user, wherein the selection instruction includes the target text display form; using the target text display form to display the information contents.

Optionally, in the apparatus for displaying textual information provided by the embodiment of the present application, the apparatus further includes:
a recording module, configured for recording each text display form selected by the user for the information feature;
a corresponding module, configured for establishing correspondences between the information feature and text display forms according to each text display form selected by the user for the information feature.

Correspondingly, the display module 503, is specifically configured for:
determining, according to the correspondence, the text display form matching with the information feature; using the text display form matching with the information feature to display the information contents.

Optionally, in the apparatus for displaying textual information provided by the embodiment of the present application, the apparatus further includes:
a recording module, configured for recording a correspondence between the information feature and the target text display form.

Optionally, in the apparatus for displaying textual information provided by the embodiment of the present application, the apparatus further includes:
a selection unit, configured for, if multiple correspondences between the information feature and text display forms are recorded, selecting, from the text display forms corresponding to the information feature, a text display form recorded the greatest number of times as a matching text display form of the information feature to store.

The apparatus in the embodiment of the present application is an apparatus applying the method for displaying textual information described above, and all the embodiments of the method for displaying textual information are applicable to the apparatus, and the same or similar beneficial effects can be achieved.

Based on the same invention concept, an embodiment of the present application further provides an electronic device, referring to Fig. 6, including a processor 601 and a memory 602; wherein, the memory 602 is configured for storing a computer program; the processor 601 is configured for executing the program stored in the memory to implement the method for displaying textual information as shown in Figs. 1-4. Specifically, the method for displaying textual information includes:
obtaining original textual information;
extracting, by means of a semantic analysis algorithm, an information feature and information contents of the original textual information, the information feature is an information type described by the original textual information, the information contents are specific contents of information described by the original textual information;
using a text display form matching with the information feature to display the information contents.

In the embodiment of the present application, by means of the semantic analysis algorithm, the information feature and information contents may be extracted from the obtained original textual information, a text display form matching with the information feature may be selected, and the information contents of the textual information may be displayed in the text display form, which improves the efficiency of creating the textual information and the user experience, and enables the textual information to be displayed by the text display form matching with the information feature, thus improving the expressiveness of the textual information.

Based on the same invention concept, an embodiment of the present application provides a machine readable storage medium. The machine readable storage medium stores a computer program therein, and the computer program implements the method for displaying textual information as shown in Figs. 1-4 when being executed by a processor. Specifically, the method for displaying textual information includes:
obtaining original textual information;
extracting, by means of a semantic analysis algorithm, an information feature and information contents of the original textual information, the information feature is an information type described by the original textual information, the information contents are specific contents of information described by the original textual information;
using a text display form matching with the information feature to display the information contents.

In the embodiment of the present application, by means of the semantic analysis algorithm, the information feature and information contents may be extracted from the obtained original textual information, a text display form matching with the information feature may be selected, and the information contents of the textual information may be displayed in the text display form, which improves the efficiency of creating the textual information and the user experience, and enables the textual information to be displayed by the text display form matching with the information feature, thus improving the expressiveness of the textual information.

Based on the same invention concept, an embodiment of the present application provides a computer program, and the computer program implements the method for displaying textual information as shown in Figs. 1-4 when being executed by a processor. Specifically, the method for displaying textual information includes:
obtaining original textual information;
extracting, by means of a semantic analysis algorithm, an information feature and information contents of the original textual information, the information feature is an information type described by the original textual information, the information contents are specific contents of information described by the original textual information;
using a text display form matching with the information feature to display the information contents.

In the embodiment of the present application, by means of the semantic analysis algorithm, the information feature and information contents may be extracted from the obtained original textual information, a text display form matching with the information feature may be selected, and the information contents of the textual information may be displayed in the text display form, which improves the efficiency of creating the textual information and the user experience, and enables the textual information to be displayed by the text display form matching with the information feature, thus improving the expressiveness of the textual information.

For embodiments of the apparatus for displaying textual information, electronic device, computer readable storage medium, and computer program, since they are substantially similar to the embodiments of the method for displaying textual information, the description thereof is relatively simple, and for the related aspects, and relevant parts can be referred to the description of the method embodiments.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the embodiments are described in corresponding ways, same or similar parts in each of the embodiments can be referred to one another, and the parts emphasized are differences to other embodiments. In particular, for embodiments of the apparatus for displaying textual information, electronic device, computer readable storage medium, and computer program, since they are substantially similar to the embodiments of the method for displaying textual information, the description thereof is relatively simple, and relevant parts can be referred to the description of embodiments of the method for displaying textual information as shown in Figs. 1-4.

The embodiments described above are merely preferred embodiments of the present application, and not intended to limit the scope of the present application. Any modifications, equivalents, improvements or the like within the spirit and principle of the application should be included in the scope of the application.

## Claims

1. A method for displaying textual information, comprising:
obtaining original textual information;
extracting, by means of a semantic analysis algorithm, an information feature and information contents of the original textual information, the information feature is an information type described by the original textual information, the information contents are specific contents of information described by the original textual information;
using a text display form matching with the information feature to display the information contents.

2. The method of claim 1, wherein, the information feature comprises a behavior type and/or a structure type, the behavior type is an action type with a time sequence described by the original textual information, and the structure type is a structure form of the information described by the original textual information.

3. The method of claim 1 or 2, wherein, using a text display form matching with the information feature to display the information contents comprises:
determining, from preset multiple text display forms, a set of text display forms matching with the information feature;
displaying the set of text display forms to enable a user to select a target text display form from the set of text display forms;
receiving a selection instruction input by the user, wherein the selection instruction comprises the target text display form;
using the target text display form to display the information contents.

4. The method of claim 3, wherein, after using the target text display form to display the information contents, the method further comprises:
recording a correspondence between the information feature and the target text display form.

5. The method of claim 4, wherein, the method further comprises:
if multiple correspondences between the information feature and text display forms are recorded, selecting, from the text display forms corresponding to the information feature, a text display form recorded the greatest number of times as a matching text display form of the information feature to store.

6. An apparatus for displaying textual information, comprising:
an obtaining module, configured for obtaining original textual information;
an extracting module, configured for extracting, by means of a semantic analysis algorithm, an information feature and information contents of the original textual information, the information feature is an information type described by the original textual information, the information contents are specific contents of information described by the original textual information;
a display module, configured for using a text display form matching with the information feature to display the information contents.

7. The apparatus of claim 6, wherein the information feature comprises a behavior type and/or a structure type, the behavior type is an action type with a time sequence described by the original textual information, the structure type is a structure form of the information described by the original textual information.

8. The apparatus of claim 6 or 7, wherein the display module is configured for:
determining, from preset multiple text display forms, a set of text display forms matching with the information feature; displaying the set of text display forms to enable a user to select a target text display form from the set of text display forms; receiving a selection instruction input by the user, wherein the selection instruction comprises the target text display form; using the target text display form to display the information contents.

9. The apparatus of claim 8, further comprising:
a recording module, configured for recording a correspondence between the information feature and the target text display form.

10. The apparatus of claim 9, further comprising:
a selection unit, configured for, if multiple correspondences between the information feature and text display forms are recorded, selecting, from the text display forms corresponding to the information feature, a text display form recorded the greatest number of times as a matching text display form of the information feature to store.

11. An electronic device comprising a memory and a processor, wherein, the memory is configured for storing a computer program; the processor is configured for executing the program stored in the memory to implement the method of any one of claims 1-5.

12. A machine readable storage medium, wherein the machine readable storage medium stores a computer program, and the computer program implements the method of any one of claims 1-5 when being executed by a processor.

13. A computer program, wherein the computer program is configured for implementing the method of any one of claims 1-5 when being executed by a processor.
